# EUROPÄISCHE PATENTANMELDUNG

(11) **EP 1 037 033 A2**
(43) Veröffentlichungstag der Anmeldung: **20.09.2000**
(21) Anmeldenummer: 00104760.4
(22) Anmeldetag: 04.03.2000
(51) Int. Cl.: G01N 1/06

(54) **Mikrotom mit einem motorischen Zustellantrieb**

(30) Priorität: 12.03.1999 DE 19911173
(71) Anmelder: Leica Microsystems Nussloch GmbH, 69226 Nussloch b. Heidelberg (DE)
(72) Erfinder: Günther, Bernd, 74933 Neidenstein (DE); Holtermüller, Siegbert, 69123 Heidelberg (DE); Scheck, Peter, 69231 Rauenberg (DE); Laudat, Andreas, 74909 Meckesheim (DE); Metzner, Rolf, 69221 Dossenheim (DE); Walter, Roland, 68804 Altlussheim (DE)

(57) **Zusammenfassung**

Es wird ein Mikrotom (1) mit einem motorischen Zustellantrieb (2) zur Erzeugung einer Relativbewegung zwischen einem zu schneidenden Objekt (7) und einem Schneidmesser (4)beschrieben. Zur Erkennung einer Position zwischen dem Schneidmesser (4) und dem Objekt (7) ist eine Steuerschaltung (8) und ein druckempfindlichen Sensor (9) vorgesehen. Beim Ansprechen des Sensors (9) wird der motorische Zustellantrieb (2) über die Steuerschaltung (8) geschaltet. Der Sensor (9) ist mit einer Sensorfläche (14) ausgestattet, die mindestens genau so groß ist wie die Oberfläche (16) des Objektes (7). Die Sensorfläche ist (14) dabei parallel zur Schnittebene (17) angeordnet.

## Beschreibung

Die Erfindung betrifft ein Mikrotom mit einem motorischen Zustellantrieb zur Erzeugung einer Relativbewegung zwischen einem zu schneidenden Objekt und einem Schneidmesser, mit einer Steuerschaltung und einem druckempfindlichen Sensor zur Erkennung einer definierten Position zwischen dem Schneidmesser und dem Objekt, wobei beim Ansprechen des Sensors der motorische Zustellantrieb über die Steuerschaltung geschaltet wird.

Moderne Mikrotome werden in zunehmendem Maße mit motorischen Antriebsmitteln ausgestattet. Bei einem derartigen Mikrotom wird der Durchsatz der zu schneidenden Proben erhöht. Bei automatisierten Mikrotomen ist man auch dazu übergegangen, neben dem Schneidantrieb zur Erzeugung einer Bewegung zwischen dem Objekt und dem Schneidmesser, auch die Zustellung des Objektes auf das Schneidmesser bzw. des Schneidmessers auf das Objekt mit einem Motor auszustatten. Ein derartiges Mikrotom ist beispielsweise in der WO 98 04 898 A1 dargestellt und beschrieben.

Bei einem Objektwechsel wird aus Sicherheitsgründen ein möglichst großer Abstand zwischen dem Messer und dem Objekt eingestellt. Dazu wird der Zustellantrieb in eine Endposition bewegt. Bei der ersten Annäherung eines zu schneidenden Objektes an das Schneidmesser muß daher ein relativ großer Weg zurückgelegt werden. Da in den meisten Fällen der Abstand zwischen dem Objekt und dem Schneidmesser unbekannt ist, wird die Verfahrgeschwindigkeit entsprechend niedrig gehalten werden.

Aus diesem Grund ist man beispielsweise dazu übergegangen im Verfahrweg Sensoren anzuordnen, die beim Ansprechen den Zustellantrieb abschalten. Ein derartiger Sensor mit einem Mikroschalter und einer damit verbundenen Auslösefahne ist beispielsweise aus der DE 42 05 256 C2 bekannt. Eine derartige Anordnung muß durch den geringen Platz im Zustellbereich sehr filigran ausgebildet sein. Diese Ausbildung hat sich jedoch als nachteilig herausgestellt, da während des laufenden Schnittbetriebs am Mikrotom Schnittgut anfällt, welches die filigrane Anordnung blockieren kann. Damit ist kein sicheres Schalten des Sensors im Dauerbetrieb gewährleistet.

Aus der US 4 691 151 ist eine Steuerschaltung für den Zustellantrieb einer Probenhalterung auf das Schneidmesser bekannt, bei der zwischen einem Grob-und einem Feinantrieb unterschieden wird. Die Zustellbewegung für den Grobtrieb wird durch eine Steuereinrichtung mit einem Schalter begrenzt.

Aus der US 3 667 330 ist ebenfalls eine Einrichtung zur Begrenzung der Zustellbewegung des Probenhalters bekannt. Hier ist an der Mikrotombasis ein Schalter angeordnet.

Die bekannten Begrenzungseinrichtungen sind alle mit dem Nachteil behaftet, daß in der Bewegungsbahn des Probenhalters bzw. des bewegten Bauteils ein mechanischer Schalter angeordnet ist, der nicht von der Probe selbst, sondern vom Probenhalter bzw. dem bewegten Bauteil ausgelöst wird. Die Größe des zu schneidenden Objektes bleibt bei diesen Einrichtungen jedoch unberücksichtigt, so daß in allen diesen Fällen der Schalter mit einem mehr oder weniger großen Sicherheitsabstand zwischen dem Objekt und dem Schneidmesser schalten muß. Eine exakte Annäherung ist bei diesen Einrichtungen nur manuell möglich. Eine Zuordnung der Schnittebene zur Oberfläche des Objektes ist bei den bekannten Einrichtungen nicht vorgesehen.

Es ist daher Aufgabe der vorliegenden Erfindung, ausgehend vom bekannten Stand der Technik, den motorischen Zustellantrieb für ein Mikrotom so weiterzubilden, daß eine eindeutige Zuordnung der Lage der Schnittebene zum Objekt einstellbar ist.

Diese Aufgabe wird erfindungsgemäß durch die im kennzeichnenden Teil des Patentanspruches 1 angegebenen Merkmale gelöst. Weitere vorteilhafte Weiterbildungen sind Gegenstand der Unteransprüche.

Das Mikrotom zeichnet sich dadurch aus, daß der motorische Zustellantrieb zur Erzeugung einer Relativbewegung zwischen dem zu schneidenden Objektes und dem Schneidmesser mit einer Steuerschaltung und einem druckempfindlichen Sensor zur Erkennung der Position zwischen dem Schneidmesser und dem Objekt ausgestattet ist. Beim Ansprechen des Sensors wird der motorische Zustellantrieb über die Steuerschaltung geschaltet und diese Position des Zustellantriebs gespeichert. Die Fläche des Sensors ist mindestens genau so groß ausgebildet wie die Oberfläche des Objektes. Die gespeicherte Position wird für eine automatische Zustellung des Objektes auf das Schneidmesser oder umgekehrt genutzt. Die Sensorfläche ist dabei parallel zur Schnittebene angeordnet.

Das Ansprechen des Sensors erfolgt über einen Kontakt zwischen der Sensorfläche und der Oberfläche des Objektes. Dies hat gegenüber den herkömmlichen Einrichtungen den Vorteil, daß hier die Beschaffenheit des Objektes und seiner Oberfläche direkt berücksichtigt wird.

Die motorische Zustelleinrichtung kann einen Schrittmotor oder einen DC-Motor mit einem Encoder aufweisen, wobei die Motoren und der Encoder elektrisch mit der Steuerschaltung verbunden sind und über diese gesteuert werden können.

Die Position des Zustellantriebs bzw. seiner Motoren sind beim Ansprechen des Sensors in der Steuerschaltung abspeicherbar. Da die Lage des Sensors zur Schnittebene fest definiert ist, kann zu jeder beliebig geformten Objektoberfläche eine eindeutige Lagebeziehung zur Schnittebene hergestellt werden. Durch die abgespeicherte Position des Zustellantriebs und der eindeutigen Lage der Schnittebene zur Lage des Sensors, kann das zu schneidende Objekt vollautomatisch auf das Schneidmesser oder das Messer vollautomatisch auf das Objekt zugestellt werden.

Der Flächensensor kann dabei beispielsweise als handelsüblicher Piezosensor oder Folientouchpad ausgebildet sein. In einer weiteren Ausgestaltung der Erfindung ist der Sensor als ortsempfindlicher Flächensensor ausgebildet. Damit wird erreicht, daß die Oberfläche der Objekte zur Lage der Schnittebene auf einfache Art und Weise automatisch ausgerichtet werden kann. Dies ist immer dann von besonderem Vorteil, wenn Serienschnitte von bereits angeschnittenen Objekten bzw. von Objekten mit einer glatten Oberfläche hergestellt werden sollen.

Die Lage der Schnittebene, die sich beispielsweise durch einen Messerwechsel ändern kann, ist ebenfalls ermittelbar. Dazu ist es vorgesehen, daß zunächst ein Objekt manuell gesteuert angeschnitten wird. Danach wird ein Kontakt zwischen der Objektoberfläche und dem Sensor über die Steuerschaltung hergestellt. Diese Position des Zustellantriebs wird in der Steuerschaltung abgespeichert und entspricht damit genau der Lage der Schnittebene. Alle nachfolgenden Objekte, unabhängig von ihrer Größe und Oberflächenstruktur, können diese Position als Referenz verwenden. Dies ist nur dadurch möglich, daß die Oberfläche des Objekts den Sensor auslöst.

In einer weiteren Ausgestaltung der Erfindung ist ein Bedienpult zur manuellen Eingabe von veränderbaren Parametern zur Steuerung des Zustellantriebs vorgesehen, welches elektrisch mit der Steuerschaltung verbunden ist. Selbstverständlich kann die Steuerschaltung auch im Bedienpult angeordnet sein. Über das Bedienpult lassen sich dann sämtliche, motorisch verstellbare Einstellungen, wie beispielsweise die Standarddicke der zu schneidenden Proben, vorwählen.

In einer bevorzugten Ausführungsform wird die Zustelleinrichtung zusammen mit einem Scheibenmikrotom verwendet, wobei das zu schneidende Objekt auf dem drehbar gelagerten Bauteils des Scheibenmikrotoms angeordnet ist.

Das Mikrotom kann zusätzlich einen motorisch orientierbaren Objekthalter aufweisen, der in zwei Raumrichtungen verstellbar ausgebildet ist. Ein manuell orientierbarer Objekthalter für ein Mikrotom ist beispielsweise aus der DE 196 04 001 A1 bekannt. Über diesen Objekthalter kann die Oberfläche des Objektes auf die Schnittebene ausgerichtet werden.

In einer besonderen Ausführungsform der vorliegenden Erfindung ist es vorgesehen, daß die Antriebsmotore mit der Steuerschaltung elektrisch verbunden sind. Zur automatischen Orientierung einer angeschnittenen Probe wird der Objekthalter motorisch in eine Anschlagposition gebracht. Dazu werden beispielsweise über die Steuerschaltung beide Stellmotore in eine ihrer Endstellungen gebracht. Danach wird über die Zustelleinrichtung ein Kontakt der Objektoberfläche mit dem Sensor hergestellt. Über die Steuerschaltung wird dann der Objekthalter und die Zustelleinrichtung so lange schrittweise angesteuert, bis vom Sensor kein Signal mehr abgegeben wird.

In einer weiteren Ausführung ist vorgesehen, den Antrieb für den Objekthalter zunächst so zu steuern, daß eine Ecke des Objekts maximal nach vorn gerichtet ist. Danach erfolgt der motorisch gesteuerte Kontakt zwischen dem Objekt und dem Flächensensor. Bei der Berührung wird dann die Orientierung des Objektes über die Stellmotore verändert und das Objekt wieder angenähert. Dieses Verfahren wird so lange ausgeführt, bis keine der Ausrichtungsänderung zu einem Kontakt mit dem Sensor führt.

Die Orientierung des Objektes kann jedoch auch dadurch erfolgen, daß über die Steuerschaltung beide Stellmotore zunächst in eine ihrer Endstellungen gebracht werden um dann einen Kontakt mit dem Sensor herzustellen. Diese und zwei weitere Eckpositionen werden angefahren und abgespeichert. Durch Abspeichern der Wege beim Anfahren der jeweiligen Ecken kann die Orientierung der Objektoberfläche zur Schnittebene ermittelt und eingestellt werden. Das Abspeichern der Wege beim Anfahren der Ecken kann entfallen, wenn der Flächensensor als ortsempfindlicher Flächensensor bzw. 2D Potentiometer Pad ausgebildet ist.

Die Erfindung wird anhand eines Ausführungsbeispiels mit Hilfe der schematischen Zeichnung näher erläutert. Es zeigen:
- Fig. 1 :: eine Prinzipdarstellung des Mikrotoms mit einer Steuereinrichtung und einem extern angeordneten Bedienpult
- Fig. 2 :: einen Ansicht eines Scheibenmikrotoms mit Flächensensor
- Fig. 3 :: eine Ansicht eines motorisch orientierbaren Objektkopfes

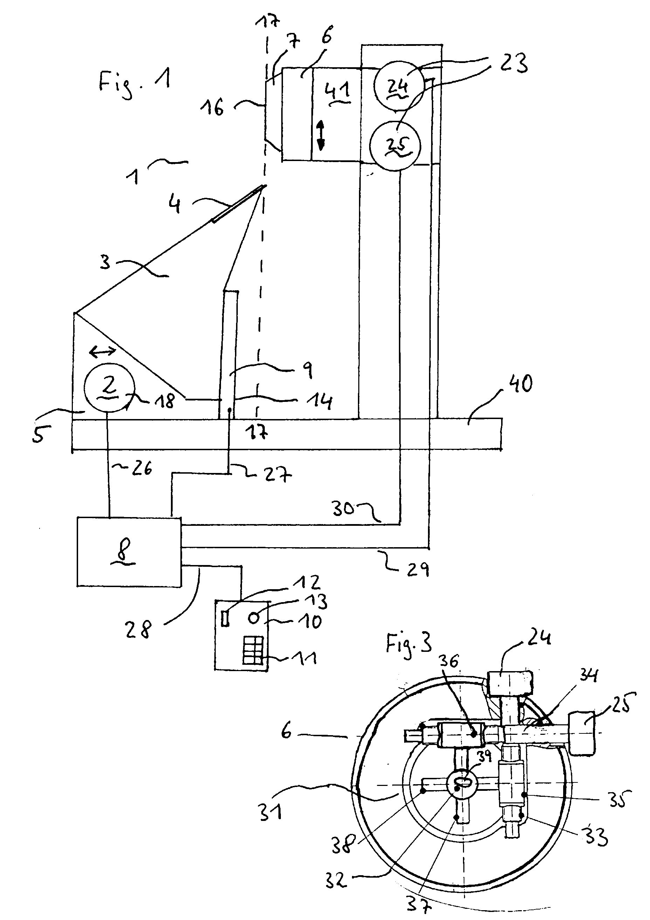

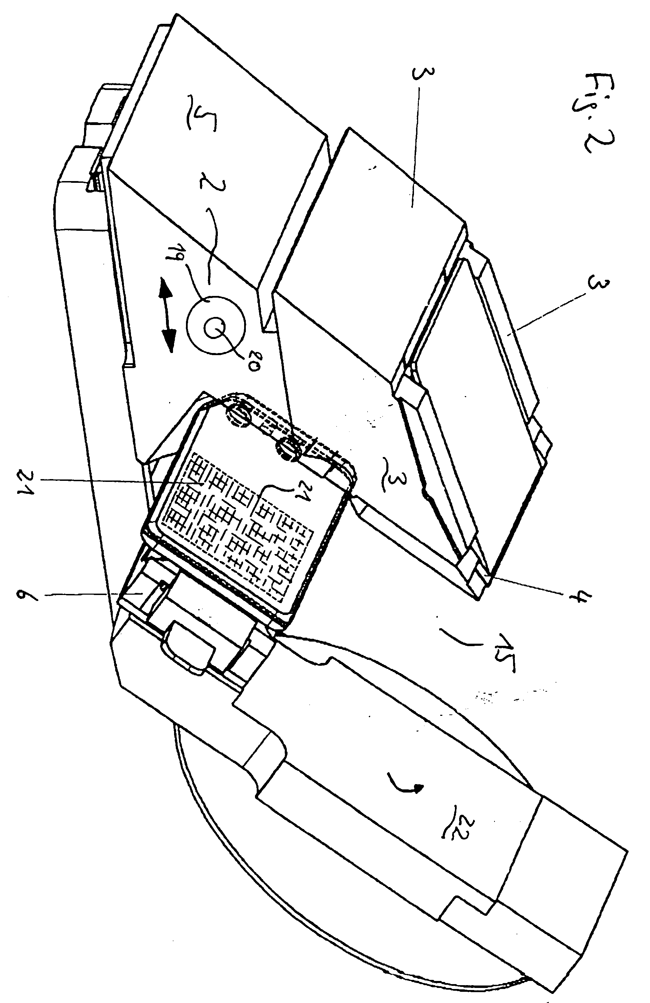

Die Figur 1 zeigt ein Mikrotom 1 mit einem Grundbett 40 und einem darauf angeordneten Zustellschlitten 5 für einen Messerhalter 3. Der Messerhalter 3 trägt ein Schneidmesser 4. Der Zustellschlitten 5 ist auf dem Grundbett 40 in Doppelpfeilrichtung bewegbar ausgebildet und wird von einem motorischen Zustellantrieb 2 mit einem Schrittmotor 18 angetrieben. Der Schrittmotor 18 ist über eine Steuerleitung 26 mit einer Steuerschaltung 8 elektrisch verbunden. Am Zustellschlitten 5 ist zusätzlich ein Sensor 9 mit einer Sensorfläche 14 angeordnet. Der Sensor 9 ist über eine Steuerleitung 27 an die Steuerschaltung 8 angeschlossen.

Am Mikrotom 1 ist ein in Doppelpfeilrichtung bewegbarer Objektkopf 41 mit einem daran angeordneten Objekthalter 6 und mit einem zu schneidenden Objekt 7 vorgesehen, dessen Oberfläche 16 in der Schnittebene 17 angeordnet ist. Zum Schneiden wird das Objekt 7 über das Schneidmesser 4 geführt. Nach einem erfolgten Schnitt wird der Objekthalter 6 wieder in seine Ausgangsstellung zurückgeführt. Über den motorischen Zustellantrieb 2 wird der Zustellschlitten 5 mit dem Schneidmesser 4 um den vorgegeben Betrag der Schnittdicke in Richtung des Objektes 7 bewegt. Danach erfolgt ein weiterer Schnitt.

Es versteht sich von selbst, daß die beschriebenen Bewegungen auch parallel zueinander ausgeführt werden können. Es muß dabei nur sichergestellt werden, daß bei der Rückstellbewegung des Objektes keine Kollision mit dem Schneidmesser bzw. dem Messerhalter stattfinden kann.

Der Objektkopf 6 ist in zwei Raumrichtungen über einen motorischen Antrieb 23 orientierbar ausgebildet. Dazu sind am Mikrotom zwei Schrittmotore 23, 24 vorgesehen, die über je eine Steuerleitung 29 und 30 mit der Steuereinrichtung elektrisch verbunden sind.

An die Steuerschaltung 8 ist ferner ein Bedienpult 10 über eine Steuerleitung 28 angeschlossen. Das Bedienpult weist ein Tastenfeld 11 für numerische Eingaben, einen Drehregler 13 für kontinuierlich veränderbare Eingaben und einen Schalter 12 zur Eingabe bestimmter Schaltstellungen und Betriebszustände auf.

Es kann selbstverständlich auch ein Fußschalter vorgesehen sein, der bei der Betätigung nicht nur einen Start/Stop - Impuls an die Steuerschaltung abgibt, sondern es können auch andere motorisch einstellbare Parameter über die Steuerschaltung beeinflußt werden. So wird beispielsweise eine bestimmte Position angefahren oder eine bestimmte Geschwindigkeit eingestellt, wenn der Fußschalter mit einer bestimmten Frequenz bzw. Dauer betätigt wird.

Zur Ermittlung des Abstandes zwischen dem Schneidmesser 4 bzw. der Schnittebene 17 und dem Sensor 9 wird ein Objekt zunächst manuell gesteuert angeschnitten. Dies ist immer dann erforderlich, wenn beispielsweise ein Messerwechsel oder eine Änderung des Schneidwinkels vorgenommen wurde und sich die Lage der Schnittebene 17 geändert hat. Zur Ermittlung und Abspeicherung der Lage der Schnittebene wird der motorische Zustellantrieb 2 über die Schaltmittel des Bedienpults 10 auf die Objektoberfläche 16 zugestellt. Nach einem Kontakt zwischen der Messerschneide und der Objektoberfläche 16 wird die Position des Zustellschlittens 5 in der Steuerschaltung 8 abgespeichert. Danach wird der Objektkopf 6 vor dem Sensor 9 positioniert und über den Zustellschlitten 5 ein Kontakt zwischen der Objektoberfläche 6 und der Sensoroberfläche 14 hergestellt. Diese Position des motorischen Zustellantriebs 2 wird ebenfalls in der Steuerschaltung 8 abgespeichert. Aus der Differenz der beiden Werte läßt sich der genaue Abstand zwischen der Schnittebene 17 und der Sensoroberfläche 14 berechnen. Da die Sensorfläche 14 größer gewählt wird als die Oberfläche des Objekts 7 wird auch bei Objekten mit sehr unregelmäßigen Oberflächen immer der höchste Punkt der Objektoberfläche 16 berücksichtigt. Es ist also völlig unerheblich, welche Stärke und welche Oberflächenstruktur das zu schneidende Objekt 7 aufweist. Nachdem der Abstand zwischen dem Sensor 9 und der Schnittebene 17 berechnet wurde können alle zu schneidenden Objekte 7 automatisch in der Schnittebene 17 positioniert werden.

Eine automatische Positionierung des Objektes 7 in der Schnittebene 17 wird nach einem Wechsel des Objektes 7 vorgenommen. Dazu wird zunächst über den motorischen Zustellantrieb 2 ein Kontakt zwischen dem Objekt 7 und dem Sensor 9 hergestellt. Zu dieser Position wird in der Steuerschaltung 8 die berechnete Differenz zwischen der Schnittebene 17 und der Sensoroberfläche 14 addiert. In diese neu berechnete Position wird der Zustellschlitten 5 automatisch bewegt. Es hat sich als vorteilhaft erwiesen, wenn das Objekt nicht mit maximaler Zustellgeschwindigkeit in die Schnittebene zugestellt wird, sondern unmittelbar vor dem Erreichen der berechneten Position abgebremst wird, um dann den Zustellantrieb mit den über das Bedienpult 10 vorgegebenen Schnittdickewerten zu beaufschlagen.

Bereits angeschnittenen Proben 7 bzw. Proben mit einer glatten Oberfläche lassen sich automatisch zur Schnittebene 17 orientieren. Dies erfolgt dadurch, daß der Objekthalter 6 zunächst über die Schrittmotore 24 und 25 in eine Anschlagposition gebracht wird. Danach wird über den motorischen Zustellantrieb 2 ein Kontakt zwischen der Objektoberfläche 16 und dem Sensor 9 hergestellt. Über die Steuerschaltung 8 werden dann die Schrittmotore 24, 25 und der motorische Zustellantrieb 2 so lange schrittweise angesteuert, bis vom Sensor 9 kein Signal mehr abgegeben wird.

Die Orientierung der Objektoberfläche 16 kann jedoch auch dadurch erfolgen, daß über die Steuerschaltung 8 beide Schrittmotore 24 und 25 zunächst in eine ihrer Endstellungen gebracht werden um dann einen Kontakt mit dem Sensor 9 herzustellen. Diese und zwei weitere Eckpositiqnen der Objektoberfläche 16 werden angefahren und abgespeichert. Durch das gleichzeitige Erfassen der zurückgelegten Wege beim Anfahren der jeweiligen Eckpositionen, kann die Orientierung der Objektoberfläche 16 zur Schnittebene 17 berechnet und eingestellt werden.

Das Abspeichern der Wege beim Anfahren der Ecken kann entfallen, wenn der Sensor 9 als ortsempfindiicher Flächensensor bzw. 2D Potentiometer Pad, wie in der Figur 2 dargestellt, ausgebildet ist.

Die Figur 2 zeigt eine Prinzipdarstellung eines Scheibenmikrotoms 15 mit dem motorischen Zustellantrieb 2, der hier einen DC-Motor 19 und einen zugehörigen Encoder 20 aufweist. Die elektrischen Verbindungen zu zur Steuerschaltung sind in dieser Figur nicht mit dargestellt.

Über diesen motorischen Antrieb ist der Zustellschlitten 5 bewegbar ausgebildet, an dem ein ortsempfindlicher Flächensensor 21 befestigt ist. Der Objekthalter 6 ist an einem drehbar gelagerten Bauteil 22 des Scheibenmikrotoms 15 angeordnet. Der Antriebsmotor für das drehbar gelagerte Bauteil 22, der auch als Schrittmotor ausgebildet sein kann, ist hier nicht mit dargestellt. Der Objekthalter 6 läßt sich über das drehbewegliche Bauteil 22 vor dem Flächensensor 21 bzw. vor dem Schneidmesser 4 positionierten. Die Positionierung und Orientierung der zu schneidenden Probe erfolgt analog zum Ausführungsbeispiel der Figur 1 mit dem Unterschied, daß das drehbewegliche Bauteil 22 nur in einer Richtung bewegt wird und somit beim Anfahren der Ausgangsstellung keine Kollisionsgefahr zwischen dem Messer 4 und dem Objekt besteht.

Die Figur 3 zeigt den motorisch orientierbaren Objektkopf 41 mit einem Kugelgelenk 31 und einer Kugel 32, die den Objekthalter 6 trägt. Der Objektkopf 41 weist zwei senkrecht zueinander angeordneten Gewindespindeln 33 und 34 auf, denen jeweils einer der beiden Schrittmotore 24 und 25 zugeordnet ist. Die Gewindespindeln 33 und 34 sind drehbar im Kugelgelenk 31 gelagert, wobei auf beiden Spindeln 33 und 34 jeweils eine Mutter 35 und 36 läuft. An den Muttern 35 und 36 ist je ein Stift 37 und 38 angeformt.

Eine Drehbewegung an den Spindeln 33 und 34 wird auf die Muttern 37, 38 übertragen, die sich dann, zusammen mit den angeformten Stiften 37, 38, entlang der jeweiligen Spindel 33, 34 bewegen. Die Längsbewegung des Stiftes 38 wird über ein Langloch 39 auf die Kugel 32 übertragen. Aus dieser Bewegung ist, resultiert seitliche Schwenkbewegung des Objektkopfes 41 in X-Richtung.

Analog dazu wird bei einer Spindeldrehung der Stift 38 in einem nicht mit dargestellten Langloch bewegt, so daß hier eine Nickbewegung des Objektkopfes 1 in Y-Richtung erfolgt.

Mit der beschriebenen Einrichtung ist es somit möglich, den Objektkopf 41 eines Mikrotoms über eine motorisch gesteuert in X- und/oder Y-Richtung auszurichten.

Die Erfindung ist nicht auf eine bestimmte Art von Mikrotomen beschränkt, sondern kann selbstverständlich in einem Rotationsmikrotom, einem Scheibenmikrotom oder einem Schlittenmikrotom verwendet werden.

### Bezugszeichenliste

- 1 -: Mikrotom
- 2 -: motorischer Zustellantrieb
- 3 -: Messerhalter
- 4 -: Schneidmesser
- 5 -: Zustellschlitten
- 6 -: Objekthalter
- 7 -: Objekt
- 8 -: Steuerschaltung
- 9-: Sensor
- 10 -: Bedienpult
- 11 -: Tastaturfeld
- 12 -: Schalter
- 13-: Drehregler
- 14 -: Sensorfläche
- 15 -: Scheibenmikrotom
- 16 -: Oberfläche des Objekts
- 17 -: Schnittebene
- 18 -: Schrittmotor
- 19-: DC - Motor
- 20 -: Encoder
- 21 -: ortsempfindlicher Flächensensor
- 22 -: drehbar gelagertes Bauteil von 15
- 23 -: motorischer Antrieb von 6
- 24 -: X - Schrittmotor von 23
- 25 -: Y - Schrittmotor von 23
- 26 -: Steuerleitung 2 - 8
- 27 -: Steuerleitung 2 - 9
- 28 -: Steuerleitung 8 - 10
- 29 -: Steuerleitung 8 - 24
- 30 -: Steuerleitung 8 - 25
- 31 -: Kugelgelenk
- 32 -: Kugel
- 33 -: Gewindespindel von 24
- 34 -: Gewindespindel von 25
- 35 -: Mutter von 33
- 36 -: Mutter von 34
- 37-: Stift von 36
- 38 -: Stift von 35
- 39 -: Langloch
- 40 -: Grundbett
- 41 -: Objektkopf

## Patentansprüche

1. Mikrotom (1) mit einem motorischen Zustellantrieb (2) zur Erzeugung einer Relativbewegung zwischen einem zu schneidenden Objekt (7) und einem Schneidmesser (4), mit einer Steuerschaltung (8) und einem druckempfindlichen Sensor (9) zur Erkennung einer Position zwischen dem Schneidmesser (4) und dem Objekt (7), wobei beim Ansprechen des Sensors (9) der motorische Zustellantrieb (2) über die Steuerschaltung (8) geschaltet wird, dadurch gekennzeichnet, daß der Sensor (9) mit einer Sensorfläche (14) ausgestattet ist, die mindestens genau so groß ist wie die Oberfläche (16) des Objektes (7) und die Sensorfläche (14) parallel zur Schnittebene (17) angeordnet ist.

2. Mikrotom (1) nach Anspruch 1, dadurch gekennzeichnet, daß das Ansprechen des Sensors (9) über einen Kontakt zwischen der Sensorfläche (14) und der Oberfläche (16) des Objekts (7) erfolgt.

3. Mikrotom (1) nach Anspruch 1 oder 2, dadurch gekennzeichnet, daß der motorische Zustellantrieb (2) einen Schrittmotor (18) aufweist und der Schrittmotor (18) elektrisch mit der Steuerschaltung (8) verbunden ist.

4. Mikrotom (1) nach Anspruch 1 oder 2, dadurch gekennzeichnet, daß der motorische Zustellantrieb (2) einen DC-Motor (19) und einen Encoder (20) aufweist und der DC-Motor (19) und der Encoder (20) elektrisch mit der Steuerschaltung (8) verbunden sind.

5. Mikrotom (1) nach Anspruch 1 bis 4, dadurch gekennzeichnet, daß die Position des Zustellantriebs (2) beim Ansprechen des Sensors (9) in der Steuerschaltung (8) abspeicherbar ist.

6. Mikrotom (1) nach mindestens einem der vorherigen Ansprüche dadurch gekennzeichnet, daß der Sensor (9) als Piezosensor oder Folientouchpad ausgebildet ist.

7. Mikrotom (1) nach mindestens einem der vorherigen Ansprüche, dadurch gekennzeichnet, daß der Sensor (9) als ortsempfindlicher Flächensensor (21) ausgebildet ist.

8. Mikrotom (1) nach mindestens einem der vorherigen Ansprüche, dadurch gekennzeichnet, daß die Lage der Schnittebene (17) durch ein manuell gesteuertes erstes Anschneiden des Objekts (7) und einen nachfolgenden Kontakt zwischen dem Objekt (7) und dem Sensor (9) über die Steuerschaltung (15) ermittelbar und abspeicherbar ist.

9. Mikrotom (1) nach mindestens einem der vorherigen Ansprüche, dadurch gekennzeichnet, daß die Steuerschaltung (8) mit einem Bedienpult (10) zur manuellen Eingabe von veränderbaren Parametern zur Steuerung des Zustellantriebs (2) verbunden ist.

10. Mikrotom (1) nach mindestens einem der vorherigen Ansprüche, dadurch gekennzeichnet, daß die Standarddicke der zu schneidenden Objekte (7) über die Steuerschaltung (8) einstellbar ausgebildet ist.

11. Mikrotom (1) nach mindestens einem der vorherigen Ansprüche, dadurch gekennzeichnet, daß das Mikrotom (1) als Scheibenmikrotom (15) ausgebildet ist und das zu schneidende Objekt (7) auf dem drehbar gelagerten Bauteil (22) des Scheibenmikrotoms (15) angeordnet ist.

12. Mikrotom (1) nach mindestens einem der vorherigen Ansprüche, dadurch gekennzeichnet, daß das zu schneidende Objekt (7) in einem motorisch orientierbaren Objekthalter (6) angeordnet ist.

13. Mikrotom (1) nach Anspruch 11, dadurch gekennzeichnet, daß der motorische Antrieb (23) des Objekthalters (6) elektrisch mit der Steuerschaltung (8) verbunden ist.

14. Mikrotom (1) nach Anspruch 12 oder 13, dadurch gekennzeichnet, daß zur automatischen Orientierung eines angeschnittenen Objektes (7) der motorisch orientierbare Objekthalter (6) über die Steuerschaltung (8) in eine Anschlagposition gebracht wird und über die motorische Zustelleinrichtung (2) ein Kontakt mit dem Sensor (9) hergestellt wird.

15. Mikrotom (1) nach Anspruch 14, dadurch gekennzeichnet, daß über die Steuerschaltung (8) der Objekthalter (6) und der Zustellantrieb (2) so lange schrittweise angesteuert werden bis vom Sensor (9) kein Signal mehr abgegeben wird.

16. Mikrotom (1) nach Anspruch 15, dadurch gekennzeichnet, daß die Position des Zustellantriebs (2) abgespeichert wird und über die Steuerschaltung (8) zwei weitere Anschlagpositionen des Objekthalters (6) angesteuert und abgespeichert werden.

17. Mikrotom (1) nach Anspruch 16, dadurch gekennzeichnet, daß die Steuerschaltung (8) derart ausgebildet ist, daß aus den abgespeicherten Positionen die Lage des angeschnittenen Objekts (7) zur Schnittebene (17) berechnet und eingestellt wird.
